# EUROPEAN PATENT SPECIFICATION

(11) **EP 4 092 482 B1**
(45) Date of publication and mention of the grant of the patent: **19.06.2024**
(21) Application number: 22173845.3
(22) Date of filing: 17.05.2022
(51) Int. Cl.: G02F 1/29, G03B 21/20, H04N 9/31, G02B 27/48

(54) **ILLUMINATION SYSTEM AND PROJECTION DEVICE**
BELEUCHTUNGSSYSTEM UND PROJEKTIONSVORRICHTUNG
SYSTÈME D'ÉCLAIRAGE ET DISPOSITIF DE PROJECTION

(30) Priority: 21.05.2021 CN 202110555408
(43) Date of publication of application: 23.11.2022
(73) Proprietor: Coretronic Corporation, Hsin-Chu 300 (TW)
(72) Inventor: ZHOU, JIA-HAO, Hsin-Chu (TW); OU, CHUNG-JEN, Hsin-Chu (TW); WU, JUI-YI, Hsin-Chu (TW); LU, CHIH-HUNG, Hsin-Chu (TW)
(74) Representative: Ter Meer Steinmeister & Partner

(56) References cited:
- US-A1- 2012 200 832
- US-A1- 2015 131 142
- US-A1- 2017 199 382
- US-A1- 2021 063 856

## Description

This application claims the priority benefit of China application 202110555408.5, filed on 2021/05/21.

### FIELD OF THE INVENTION

The invention relates to a display device, and more particularly to an illumination system and a projection device using the same.

### BACKGROUND OF THE INVENTION

The type of light source used in projection devices has evolved from ultra high pressure mercury lamps (UHP lamps), light emitting diodes (LEDs) to laser diodes (LDs) with the market demand for projection device brightness, color saturation, service life, non-toxic environmental protection, etc.

In a conventional projection device using a laser diode, the laser diode provides an excitation light beam to excite the phosphor layer on the phosphor wheel to generate a fluorescent light beam. However, due to the high coherence of the laser, the excitation light beam is prone to interference, resulting in randomly distributed laser speckles with mixed brightness and darkness.

The method currently used to reduce the laser speckles is to add a diffusion plate or change the focal length. Vibrating the diffusion plate may continuously change the position of a light spot, which reduces the laser speckles and improves the light uniformity. However, the use of diffusion plate makes it difficult to concentrate the light beam.

On the other hand, the use of a variable focus lens may also continuously change the position of the light spot, which reduces the laser speckles and improves the light uniformity. However, when the light beam needs to be kept in a plane wave (that is, parallel light) state, a single variable focus lens would destroy the wave front travel mode, resulting in poor imaging quality.

The information disclosed in this "BACKGROUND OF THE INVENTION" section is only for enhancement understanding of the background of the invention and therefore it may contain information that does not form the prior art that is already known to a person of ordinary skill in the art. Furthermore, the information disclosed in this "BACKGROUND OF THE INVENTION" section does not mean that one or more problems to be solved by one or more embodiments of the invention were acknowledged by a person of ordinary skill in the art.
US 2015/131142 A1 describes a beam expander including a first lens unit including one of an SLM or a VFL, a second lens unit being optically coupled to the first lens unit and including one of an SLM or a VFL, and a control unit controlling focal lengths of the first and second lens units.
US 2021/063856 A1 describes a lens module disposed on a transmission path of a beam to expand the beam. The lens module includes a first lens assembly and a second lens assembly. The first lens assembly is disposed on the transmission path of the beam, and the first lens assembly has a first equivalent focal length. US 2012/200832 A1 and US 2017/199382 A1 also constitute prior art useful for understanding the invention.

### SUMMARY OF THE INVENTION1

It is an object of the present invention to provide an illumination system, which may increase the light uniformity and reduce laser speckle.

It is an object of the present invention to provide a projection device, which may increase the light uniformity and improve the imaging quality.

Other advantages and objects of the invention may be further illustrated by the technical features broadly embodied and described as follows.

The object is solved by the features of independent claim 1. Preferred embodiments are given in the dependent claims.

In order to achieve one or a portion of or all of the objects or other objects, an illumination system provided in an embodiment of the invention includes an excitation light source, a first variable focus lens, a second variable focus lens, and a control unit. The excitation light source is adapted to provide an excitation light beam. The first variable focus lens is disposed on a transmission path of the excitation light beam. The second variable focus lens is disposed on the transmission path of the excitation light beam, and the first variable focus lens is located between the excitation light source and the second variable focus lens. The second variable focus lens is adapted to receive the excitation light beam exited from the first variable focus lens. The control unit is electrically connected to the first variable focus lens and the second variable focus lens.

According to the claimed invention, the control unit may be adapted to synchronously adjust focal lengths of the first variable focus lens and the second variable focus lens, such that the focal length of the first variable focus lens and the focal length of the second variable lens are continuously changed such that a parallel excitation beam remains a parallel light beam after passing through the first and second variable focus lenses, so as to continuously change a size of a light spot of the excitation light beam passing through the second variable focus lens.

In order to achieve one or a portion of or all of the objects or other objects, a projection device provided in an embodiment of the invention includes a light valve, a projection lens and the above-mentioned illumination system.

The above-mentioned illumination system may further include a wavelength conversion wheel, which is disposed on the transmission path of the excitation light beam passing through the second variable focus lens.

In one or more embodiments, the wavelength conversion wheel is adapted to convert the excitation light beam into a converted light beam.

An illumination light beam may include the excitation light beam and the converted light beam.

The light valve may be disposed on a transmission path of the illumination light beam, and may be adapted to convert the illumination light beam into an image light beam.

The projection lens may be disposed on a transmission path of the image light beam and is adapted to allow the image light beam to pass through.

In one or more embodiments, the excitation light beam passing through the second variable focus lens may be parallel light.

In one or more embodiments, the first variable focus lens and the second variable focus lens may be confocal.

In one or more embodiments, a distance between the first variable focus lens and the second variable focus lens may be fixed.

In one or more embodiments, a diopter of the first variable focus lens and a diopter of the second variable focus lens may be both positive.

In one or more embodiments, in a time sequence, a diopter of the first variable focus lens may be negative, and a diopter of the second variable focus lens may be positive.

In one or more embodiments, in another time sequence, the diopter of the first variable focus lens may be positive, and the diopter of the second variable focus lens may be negative.

In one or more embodiments, a light spot shape of the excitation light beam passing through the second variable focus lens may be circular.

In one or more embodiments, the illumination system may further comprise a wavelength conversion wheel.

In one or more embodiments, the wavelength conversion wheel may be disposed on the transmission path of the excitation light beam passing through the second variable focus lens.

The wavelength conversion wheel may be adapted to convert the excitation light beam into a converted light beam.

In the illumination system of the embodiment of the invention, the control unit is electrically connected to the first variable focus lens and the second variable focus lens.

In the illumination system of the embodiment of the invention, the control unit may be adapted to synchronously adjust focal lengths of the first variable focus lens and the second variable focus lens.

Therefore, when the excitation light beam passes through the first variable focus lens, a position of a light spot may be continuously changed due to the continuous change of the focal length, so that the laser speckle is reduced and the light uniformity is increased. At the same time, the excitation light beam passing through the first variable focus lens would be adjusted from parallel light to divergent light or convergent light due to the change in focal length. The focal length of the second variable focus lens is adjusted according to the current focal length of the first variable focus lens, so that the excitation light beam exited from the first variable focus lens and passing through the second variable focus lens may be adjusted back to parallel light to achieve an effect of light compensation. Since the projection device of the embodiment of the invention uses the above-mentioned illumination system, the light uniformity may be increased, and the imaging quality may be improved.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of an illumination system of one embodiment of the invention;
FIG. 2 is a schematic diagram of a form transformation of a first variable focus lens or a second variable focus lens of one embodiment of the invention;
FIG. 3A is a schematic diagram of a focal length adjustment of a first variable focus lens and a second variable focus lens of one embodiment of the invention;
FIG. 3B to FIG. 3C are schematic diagrams of a focal length adjustment of a first variable focus lens and a second variable focus lens of another embodiment of the invention;
FIG. 4 is a schematic diagram of a light spot formed by an excitation light beam on a wavelength conversion wheel of the embodiment; and
FIG. 5 is a block diagram of a projection device of one embodiment of the invention.

### DETAILED DESCRIPTION OF PREFERRED EMBODIMENTS

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing", "faces", and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component facing "B" component directly or one or more additional components is between "A" component and "B" component. Also, the description of "A" component "adjacent to" "B" component herein may contain the situations that "A" component is directly "adjacent to" "B" component or one or more additional components is between "A" component and "B" component. Accordingly, the drawings and descriptions will be regarded as illustrative in nature and not as restrictive.

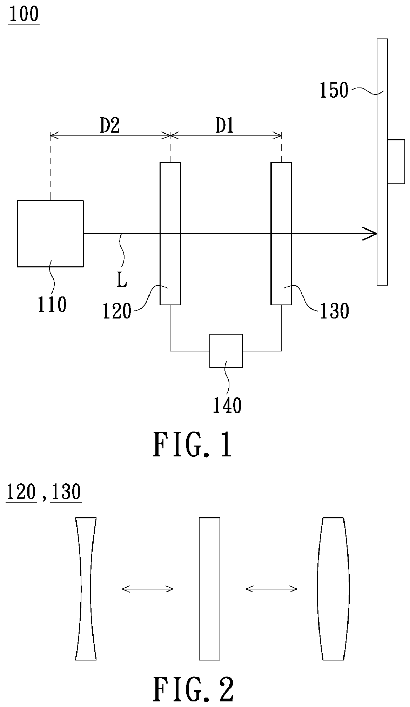

FIG. 1 is a schematic diagram of an illumination system of one embodiment of the invention. FIG. 2 is a schematic diagram of a form transformation of a first variable focus lens or a second variable focus lens of one embodiment of the invention. Referring to FIG. 1 and FIG. 2, the illumination system 100 of the embodiment includes an excitation light source 110, a first variable focus lens 120, a second variable focus lens 130, and a control unit 140. The excitation light source 110 is adapted to provide an excitation light beam L. The first variable focus lens 120 is disposed on a transmission path of the excitation light beam L. The second variable focus lens 130 is disposed on the transmission path of the excitation light beam L, and the first variable focus lens 120 is located between the excitation light source 110 and the second variable focus lens 130. The second variable focus lens 130 is adapted to receive the excitation light beam L exited from the first variable focus lens 120. Specifically, after being emitted from the excitation light source 110, the excitation light beam L first passes through the first variable focus lens 120, and then passes through the second variable focus lens 130. The positions of the first variable focus lens 120 and the second variable focus lens 130 may be interchanged, and the invention does not limit the relative positions of the first variable focus lens 120 and the second variable focus lens 130 in the illumination system 100. The control unit 140 is electrically connected to the first variable focus lens 120 and the second variable focus lens 130, and is adapted to synchronously adjust focal lengths of the first variable focus lens 120 and the second variable focus lens 130.

The excitation light source 110 is, for example, a laser light source or other light sources that may provide an excitation light beam L with high coherence. In the embodiment, the excitation light beam L emitted from the excitation light source 110 is parallel light and is transmitted to the first variable focus lens 120.

Regarding the first variable focus lens 120 and the second variable focus lens 130, the purpose of changing the focal length is achieved by changing a curvature of a film or an interface (changing the shape of the lens surface), or by changing the characteristics of a material itself. As shown in FIG. 2, taking the first variable focus lens 120 as an example, the first variable focus lens 120 may be arbitrarily switched between a form of flat lens, a form of concave lens, and a form of convex lens. Depending on the focal length, the light beam passing through the first variable focus lens 120 is converted into parallel light, convergent light or divergent light. The type of the first variable focus lens 120 includes, for example, a liquid crystal lens, a hydraulic lens, a mechanically driven lens, an electrowetting lens, etc., but is not limited thereto. The above description of the first variable focus lens 120 is also applicable to the second variable focus lens 130, and in the embodiment, the first variable focus lens 120 and the second variable focus lens 130 may be selected from different types of variable focus lenses.

Under the configuration of the embodiment, a distance D1 between the first variable focus lens 120 and the second variable focus lens 130 is, for example, fixed, and a distance D2 between the excitation light source 110 and the first variable focus lens 120 is also fixed, for example. Since both the first variable focus lens 120 and the second variable focus lens 130 may change the focal length, it is not necessary to change the focal length by moving back and forth on the transmission path of the excitation light beam L. Therefore, compared with the general lens used in the known illumination system, a volume of the illumination system 100 of the embodiment is smaller. When the distance D1 is fixed, the variables may also be reduced, and a quality of the excitation light beam L may be more stable.

On the other hand, the first variable focus lens 120 is confocal with the second variable focus lens 130, for example, but it is not limited thereto. A conjugate focus may be adjusted between the first variable focus lens 120 and the second variable focus lens 130, between the excitation light source 110 and the first variable focus lens 120, or on a side of the second variable focus lens 130 facing away from the first variable focus lens 120. In another embodiment, the focus of the first variable focus lens 120 and the focus of the second variable focus lens 130 may be adjusted to be at different positions.

Specifically, the function of the first variable focus lens 120 is to continuously change the focal length, so that a position of a light spot generated by the excitation light beam L would be continuously changed after passing through the first variable focus lens 120, resulting in a reduction of laser speckle and an increase of light uniformity. The function of the second variable focus lens 130 is that when the excitation light beam L passing through the first variable focus lens 120 is adjusted from parallel light to divergent light or convergent light due to a change in focal length, the second variable focus lens 130 adjusts the excitation light beam L by changing its focal length, so that the excitation light beam L exited from the first variable focus lens 120 and passing through the second variable focus lens 130 is then adjusted back to parallel light to achieve an effect of light compensation. In this way, the light uniformity may be increased and the image quality may be maintained.

The first variable focus lens 120 and the second variable focus lens 130 continuously change their focal lengths to achieve the effect of parallel light compensation. The control unit 140 is, according to the claimed invention, adapted to synchronously adjust the focal lengths of the first variable focus lens 120 and the second variable focus lens 130. In order to meet the requirements of the invention, the control unit 140 synchronously and respectively adjusts the focal lengths of the first variable focus lens 120 and the second variable focus lens 130. The control unit 140 giving different signals to the first variable focus lens 120 and the second variable focus lens 130 at different time sequences to synchronously change the form of the first variable focus lens 120 and the second variable focus lens 130 to adjust the focal length will be described in detail below.

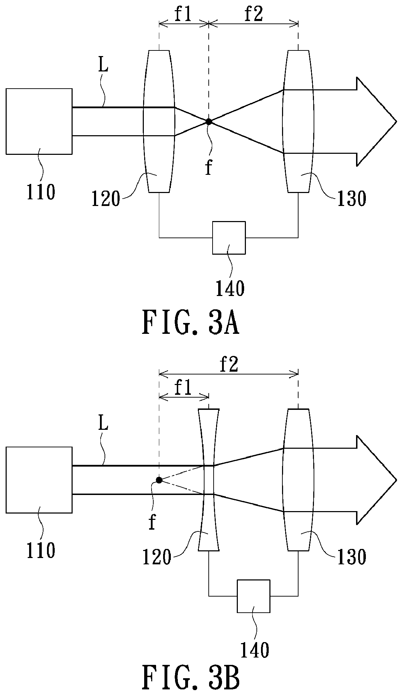

FIG. 3A is a schematic diagram of a focal length adjustment of a first variable focus lens and a second variable focus lens of one embodiment of the invention. Referring to FIG. 3A, a diopter of the first variable focus lens 120 and a diopter of the second variable focus lens 130 are both positive. That is, both the first variable focus lens 120 and the second variable focus lens 130 are in the form of convex lenses, and a focus f is located between the first variable focus lens 120 and the second variable focus lens 130. In a time sequence, the excitation light beam L is adjusted to convergent light after passing through the first variable focus lens 120, and then the convergent light becomes divergent light after passing through the focal point f and is transmitted to the second variable focus lens 130. Subsequently, the excitation light beam L is adjusted back to parallel light by the convergence after passing through the second variable focus lens 130. Since a focal length f2 is greater than a focal length f1, the light beam after passing through the second variable focus lens 130 is enlarged compared with the original excitation light beam. In other words, a light spot area of the excitation light beam L projected by the excitation light source 110 is smaller than a light spot area of the excitation light beam L after passing through the first variable focus lens 120 and the second variable focus lens 130. On the contrary, in another time sequence, when the focus f is located between the first variable focus lens 120 and the second variable focus lens 130 and the focal length f2 is smaller than the focal length f1, the light beam after passing through the second variable focus lens 130 is narrowed compared with the original excitation light beam. In other words, the light spot area of the excitation light beam L projected by the excitation light source 110 is larger than the light spot area of the excitation light beam L after passing through the first variable focus lens 120 and the second variable focus lens 130.

FIG. 3B to FIG. 3C are schematic diagrams of a focal length adjustment of a first variable focus lens and a second variable focus lens of another embodiment of the invention. Referring to FIG. 3B, in a first time sequence of another embodiment, the diopter of the first variable focus lens 120 is negative and the diopter of the second variable focus lens 130 is positive. That is, the first variable focus lens 120 is in the form of a concave lens, the second variable focus lens 130 is in the form of a convex lens, and the focus f is located between the excitation light source 110 and the first variable focus lens 120. The excitation light beam L is adjusted to divergent light after passing through the first variable focus lens 120 and is transmitted to the second variable focus lens 130. Subsequently, the excitation light beam L is adjusted back to parallel light by the convergence after passing through the second variable focus lens 130. Since the focal length f2 is greater than the focal length f1, the light beam after passing through the second variable focus lens 130 is enlarged compared with the original excitation light beam. In other words, the light spot area of the excitation light beam L projected by the excitation light source 110 is smaller than the light spot area of the excitation light beam L after passing through the first variable focus lens 120 and the second variable focus lens 130.

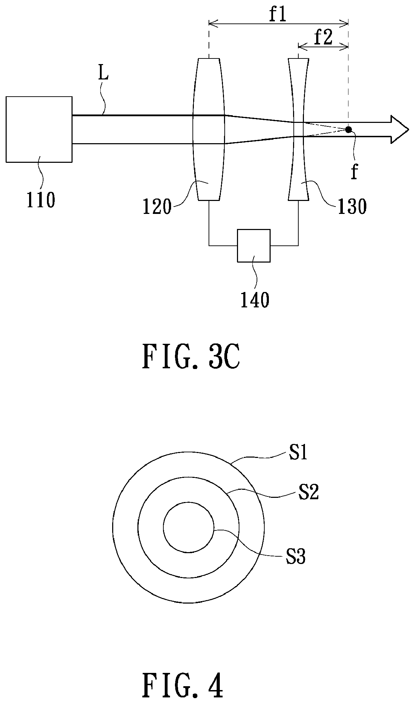

Referring to FIG. 3C, in another time sequence, the control unit 140 gives different signals to change the diopter of the first variable focus lens 120 to be positive and to change the diopter of the second variable focus lens 130 to be negative. That is, the first variable focus lens 120 is in the form of a convex lens, the second variable focus lens 130 is in the form of a concave lens, and the focus f is located on a side of the second variable focus lens 130 facing away from the first variable focus lens 120. The excitation light beam L is adjusted to convergent light after passing through the first variable focus lens 120, and is transmitted to the second variable focus lens 130. Subsequently, the excitation light beam L is adjusted back to parallel light by the divergence after passing through the second variable focus lens 130. Since the focal length f2 is smaller than the focal length f1, the light beam after passing through the second variable focus lens 130 is narrowed compared with the original excitation light beam. In other words, the light spot area of the excitation light beam L projected by the excitation light source 110 is larger than the light spot area of the excitation light beam L passing through the first variable focus lens 120 and the second variable focus lens 130.

It can be seen from the above that by synchronously and respectively adjusting the focal lengths of the first variable focus lens 120 and the second variable focus lens 130, the control unit 140 may enlarge or narrow the excitation light beam L while maintaining parallel light at different time sequences, so that the light spot position is continuously changed, thereby reducing the laser speckle and increasing the light uniformity. FIG. 4 is a schematic diagram of a light spot formed by an excitation light beam on a wavelength conversion wheel of the embodiment. Referring to FIG. 1 and FIG. 4, the illumination system 100 of the embodiment further includes, for example, a wavelength conversion wheel 150, which is disposed on the transmission path of the excitation light beam L passing through the second variable focus lens 130 and is adapted to convert the excitation light beam L into a converted light beam. A wavelength conversion material used in the wavelength conversion wheel 150 includes, for example, phosphor in glass (PIG), phosphor in ceramic (PIC), polycrystal phosphor sheet, single crystal phosphor sheet, or phosphor in silicon (PIS), etc., but is not limited thereto. In addition, a light spot shape of the excitation light beam L provided by the excitation light source 110 of the embodiment is, for example, circular, but it is not limited thereto. As shown in FIG. 4, a light spot S1 is formed by the enlarged excitation light beam L on the wavelength conversion wheel 150, a light spot S2 is formed by the normal excitation light beam L on the wavelength conversion wheel 150, and a light spot S3 is formed by the narrowed excitation light beam L on the wavelength conversion wheel 150. Among them, the light spot S3 has the highest light uniformity due to the superposition of the light spots S1 to S3 within the area range of the light spot S3. It should be noted that the "enlarged" and "narrowed" referred to here are not a single fixed size state, but a linear change between continuous ranges, and the light spots S1 to S3 are only illustrative explanations. The time sequential and synchronous adjustment of the first variable focus lens 120 and the second variable focus lens 130 produces continuous changes in the size of the light spot, which may eliminate laser speckle and increase the light uniformity of the excitation beam L.

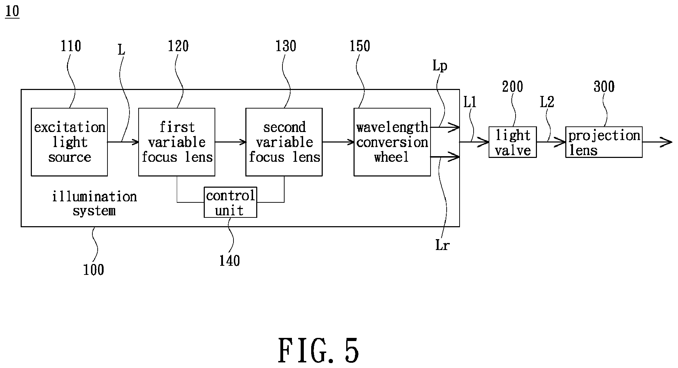

FIG. 5 is a block diagram of a projection device of one embodiment of the invention. Referring to FIG. 5, the projection device 10 of the embodiment includes a illumination system 10, a light valve 200, and a projection lens 300. The illumination system 10 is adapted to provide an illumination light beam L1. The light valve 200 is disposed on a transmission path of the illumination light beam L1 and is adapted to convert the illumination light beam L1 into an image light beam L2. The projection lens 300 is disposed on a transmission path of the image light beam L2 and is adapted to project the image light beam L2 onto a screen, and then form an image frame on the screen.

The light valve 200 may be a transmissive light valve or a reflective light valve, in which the transmissive light valve may be a transmissive liquid crystal panel, and the reflective light valve may be a digital micro-mirror device (DMD), a liquid crystal display (LCD), a liquid crystal on silicon panel (LCoS panel), a transparent liquid crystal panel, an electro-optical modulator, a maganeto-optic modulator, and an acousto-optic modulator (AOM), but not limited thereto. According to different design requirements, the quantity of light valve 200 may be one or more.

The projection lens 300 includes, for example, a combination of one or more optical lenses having diopter, such as various combinations of non-planar lenses including biconcave lenses, lenticular lenses, meniscus lenses, convex and concave lenses, plano-convex lenses, and plano-concave lenses. In an embodiment, the projection lens 300 may also include a planar optical lens. The invention does not limit the type and kind of projection lens 300.

The wavelength conversion wheel 150 includes a conversion region and an optical region (not shown). The optical region may be a reflection region or a transmission region. When the excitation light beam L is irradiated on the wavelength conversion wheel 150, the conversion region is adapted to convert the excitation light beam L into a converted light beam Lp, and a wavelength of the converted light beam Lp is different from a wavelength of the excitation light beam L. When the optical region is the reflection region, it is adapted to reflect the excitation light beam L, or when the optical region is the transmission region, it is adapted to allow the excitation light beam L to pass through. That is, the excitation light beam L leaving the wavelength conversion wheel 150 via the optical region is the excitation light beam Lr. The illumination light beam L1 includes the converted light beam Lp and the excitation light beam Lr. The illumination system 100 may further include other optical elements to transmit the illumination light beam L1 to the light valve 200.

Since the illumination system 100 may increase the light uniformity of the illumination light beam L1 and eliminate laser speckle, the projection device 10 using the illumination system 100 may also increase the light uniformity and improve the imaging quality of the image light beam L2 projected to the screen.

In summary, in the illumination system of the embodiment of the invention, the control unit is electrically connected to the first variable focus lens and the second variable focus lens, and is adapted to synchronously adjust focal lengths of the first variable focus lens and the second variable focus lens according to the time sequence. Therefore, when the excitation light beam passes through the first variable focus lens, a position of a light spot may be continuously changed due to the continuous change of the focal length, so that the laser speckle is reduced and the light uniformity is increased. At the same time, the excitation light beam passing through the first variable focus lens would be adjusted from parallel light to divergent light or convergent light due to the change in focal length. The focal length of the second variable focus lens is adjusted according to the current focal length of the first variable focus lens, so that the excitation light beam exited from the first variable focus lens and passing through the second variable focus lens may be adjusted back to parallel light to achieve an effect of light compensation. Since the projection device of the embodiment of the invention uses the above-mentioned illumination system, the light uniformity may be increased, and the imaging quality may be improved.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto.

Therefore, the term "the invention", "The invention" or the like is not necessary limited the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims. Furthermore, the terms such as the first variable focus lens, the second variable focus lens, and the first time sequence are only used for distinguishing various elements and do not limit the number of the elements.

### Description of reference signs:

10: projection device
100: illumination system
110: excitation light source
120: first variable focus lens
130: second variable focus lens
140: control unit
150: wavelength conversion wheel
200: light valve
300: projection lens
D: distance
f: focus
f1 , 12: focal length
L: excitation light beam
L1: illumination light beam
L2: image light beam
Lp: converted light beam
Lr: reflected excitation light beam
S1, S2, S3: light spot.

## Claims

1. An illumination system, comprising an excitation light source (110), a first variable focus lens (120), a second variable focus lens (130), and a control unit (140), wherein:
the excitation light source (110) is adapted to provide an excitation light beam (L);
the first variable focus lens (120) is disposed on a transmission path of the excitation light beam (L);
the second variable focus lens (130) is disposed on the transmission path of the excitation light beam (L), the first variable focus lens (120) is located between the excitation light source (110) and the second variable focus lens (130), and the second variable focus lens (130) is adapted to receive the excitation light beam (L) exited from the first variable focus lens (120); and
the control unit (140) is electrically connected to the first variable focus lens (120) and the second variable focus lens (130),
**characterized in that** the control unit (140) is adapted to synchronously adjust focal lengths of the first variable focus lens (120) and the second variable focus lens (1330) such that
the focal length of the first variable focus lens (120) and the focal length of the second variable lens (130) are continuously changed such that a parallel light excitation beam remains a parallel light beam after passing through the first and second variable focus lenses, so as to continuously change a size of a light spot of the excitation light beam (L) passing through the second variable focus lens (130).

2. The illumination system according to claim 1, wherein the excitation light beam (L) passing through the second variable focus lens (130) is parallel light.

3. The illumination system according to claim 1 or 2, wherein a focus (f) of the first variable focus lens (120) and a focus (f) of the second variable focus (130) lens are at the same position, wherein the focus (f) of the first variable focus lens (120) and the second variable focus (130) lens is located between the first variable focus lens (120) and the second variable focus (130) lens, or the focus (f) of the first variable focus lens (120) and the second variable focus (130) lens is located between the excitation light source (110) and the first variable focus lens (120), or the focus (f) of the first variable focus lens (120) and the second variable focus (130) lens is located on a side of the second variable focus lens (130) facing away from the first variable focus lens (120).

4. The illumination system according to claim 1 or 2 or 3, wherein a distance between the first variable focus lens (120) and the second variable focus lens (130) is fixed.

5. The illumination system according to any one of the preceding claims, wherein a diopter of the first variable focus lens (120) and a diopter of the second variable focus lens (130) are both positive.

6. The illumination system according to any one of the preceding claims, wherein in a time sequence, a diopter of the first variable focus lens (120) is negative, and a diopter of the second variable focus lens (130) is positive.

7. The illumination system according to claim 6, wherein in another time sequence, the diopter of the first variable focus lens (120) is positive, and the diopter of the second variable focus lens (130) is negative.

8. The illumination system according to any one of the preceding claims, wherein a light spot shape (S1, S2, S3) of the excitation light beam (L) passing through the second variable focus lens (130) is circular.

9. The illumination system according to any one of the preceding claims, further comprising a wavelength conversion wheel (150), disposed on the transmission path of the excitation light beam (L) passing through the second variable focus lens (130) and adapted to convert the excitation light beam (L) into a converted light beam (Lp).

10. A projection device, comprising an illumination system (100) as claimed in claim 9, a light valve (200) and a projection lens (300), wherein the illumination system (100) is adapted to provide an illumination light beam (L1), wherein the illumination light beam (L1) includes the excitation light beam (L) and the converted light beam (Lp).

11. The projection device according to claim 10, wherein the light valve (200) is disposed on a transmission path of the illumination light beam (L1) and is adapted to convert the illumination light beam (L1) into an image light beam (L2); and
the projection lens (300) is disposed on a transmission path of the image light beam (L2) and is adapted to allow the image light beam (L2) to pass through.

## Patentansprüche

1. Beleuchtungssystem, das eine Anregungslichtquelle (110), eine erste Linse (120) mit variablem Brennpunkt, eine zweite Linse (130) mit variablem Brennpunkt und eine Steuereinheit (140) umfasst, wobei:
die Anregungslichtquelle (110) ausgelegt ist, einen Anregungslichtstrahl (L) zu liefern;
die erste Linse (120) mit variablem Brennpunkt auf einem Übertragungsweg des Anregungslichtstrahls (L) angeordnet ist;
die zweite Linse (130) mit variablem Brennpunkt auf dem Übertragungsweg des Anregungslichtstrahls (L) angeordnet ist, die erste Linse (120) mit variablem Brennpunkt sich zwischen der Anregungslichtquelle (110) und der zweiten Linse (130) mit variablem Brennpunkt befindet und die zweite Linse (130) mit variablem Brennpunkt ausgelegt ist, den Anregungslichtstrahl (130), der von der ersten Linse (120) mit variablem Brennpunkt angeregt wird, zu empfangen; und
die Steuereinheit (140) mit der ersten Linse (120) mit variablem Brennpunkt und der zweiten Linse (130) mit variablem Brennpunkt elektrisch verbunden ist,
**dadurch gekennzeichnet, dass** die Steuereinheit (140) ausgelegt ist, Brennweiten der ersten Linse (120) mit variablem Brennpunkt und der zweiten Linse (130) mit variablem Brennpunkt derart synchron anzupassen, dass
die Brennweite der ersten Linse (120) mit variablem Brennpunkt und die Brennweite der zweiten Linse (130) mit variablem Brennpunkt kontinuierlich derart geändert werden, dass ein paralleler Lichtanregungsstrahl nach dem Durchgang durch die erste und die zweite Linse mit variablem Brennpunkt ein paralleler Lichtstrahl bleibt, um eine Größe eines Lichtpunkts des Anregungslichtstrahls (L), der durch die zweite Linse (130) mit variablem Brennpunkt verläuft, kontinuierlich zu ändern.

2. Beleuchtungssystem nach Anspruch 1, wobei der Anregungslichtstrahl (L), der durch die zweite Linse (130) mit variablem Brennpunkt verläuft, paralleles Licht ist.

3. Beleuchtungssystem nach Anspruch 1 oder 2, wobei ein Brennpunkt (f) der ersten Linse (120) mit variablem Brennpunkt und ein Brennpunkt (f) der zweiten Linse (130) mit variablem Brennpunkt an derselben Position sind, wobei sich der Brennpunkt (f) der ersten Linse (120) mit variablem Brennpunkt und der zweiten Linse (130) mit variablem Brennpunkt zwischen der ersten Linse (120) mit variablem Brennpunkt und der zweiten Linse (130) mit variablem Brennpunkt befindet oder sich der Brennpunkt (f) der ersten Linse (120) mit variablem Brennpunkt und der zweiten Linse (130) mit variablem Brennpunkt zwischen der Anregungslichtquelle (110) und der ersten Linse (120) mit variablem Brennpunkt befindet oder sich der Brennpunkt (f) der ersten Linse (120) mit variablem Brennpunkt und der zweiten Linse (130) mit variablem Brennpunkt auf einer Seite der zweiten Linse (130) mit variablem Brennpunkt, die von der ersten Linse (120) mit variablem Brennpunkt abgewandt ist, befindet.

4. Beleuchtungssystem nach Anspruch 1 oder 2 oder 3, wobei ein Abstand zwischen der ersten Linse (120) mit variablem Brennpunkt und der zweiten Linse (130) mit variablem Brennpunkt festgelegt ist.

5. Beleuchtungssystem nach einem der vorhergehenden Ansprüche, wobei eine Dioptrie der ersten Linse (120) mit variablem Brennpunkt und eine Dioptrie der zweiten Linse (130) mit variablem Brennpunkt beide positiv sind.

6. Beleuchtungssystem nach einem der vorhergehenden Ansprüche, wobei in einer Zeitfolge eine Dioptrie der ersten Linse (120) mit variablem Brennpunkt negativ ist und eine Dioptrie der zweiten Linse (130) mit variablem Brennpunkt positiv ist.

7. Beleuchtungssystem nach Anspruch 6, wobei in einer anderen Zeitfolge die Dioptrie der ersten Linse (120) mit variablem Brennpunkt positiv ist und die Dioptrie der zweiten Linse (130) mit variablem Brennpunkt negativ ist.

8. Beleuchtungssystem nach einem der vorhergehenden Ansprüche, wobei eine Form des Lichtpunkts (S1, S2, S3) des Anregungslichtstrahls (L), der durch die zweite Linse (130) mit variablem Brennpunkt verläuft, kreisförmig ist.

9. Beleuchtungssystem nach einem der vorhergehenden Ansprüche, das ferner ein Wellenlängenumsetzungsrad (150) umfasst, das auf dem Übertragungsweg des Anregungslichtstrahls (L), der durch die zweite Linse (130) mit variablem Brennpunkt verläuft, angeordnet ist und ausgelegt ist, den Anregungslichtstrahl (L) in einen umgesetzten Lichtstrahl (Lp) umzusetzen.

10. Projektionsvorrichtung, die ein Beleuchtungssystem (100) nach Anspruch 9, ein Lichtventil (200) und eine Projektionslinse (300) umfasst, wobei das Beleuchtungssystem (100) ausgelegt ist, einen Beleuchtungslichtstrahl (L1) zu liefern, wobei der Beleuchtungslichtstrahl (L1) den Anregungslichtstrahl (L) und den umgesetzten Lichtstahl (Lp) enthält.

11. Projektionsvorrichtung nach Anspruch 10, wobei das Lichtventil (200) auf einem Übertragungsweg des Beleuchtungslichtstrahls (L1) angeordnet ist und ausgelegt ist, den Beleuchtungslichtstrahl (L1) in einen Bildlichtstahl (L2) umzusetzen; und
die Projektionslinse (300) auf einem Übertragungsweg des Bildlichtstrahls (L2) angeordnet ist und ausgelegt ist, dem Bildlichtstrahl (L2) zu erlauben, hindurchzulaufen.

## Revendications

1. Système d'éclairage, comportant une source de lumière d'excitation (110), une première lentille à focale variable (120), une seconde lentille à focale variable (130) et une unité de commande (140), dans lequel :
la source de lumière d'excitation (110) est adaptée pour délivrer un faisceau de lumière d'excitation (L) ;
la première lentille à focale variable (120) est disposée sur un trajet de transmission du faisceau de lumière d'excitation (L) ;
la seconde lentille à focale variable (130) est disposée sur le trajet de transmission du faisceau de lumière d'excitation (L), la première lentille à focale variable (120) est située entre la source de lumière d'excitation (110) et la seconde lentille à focale variable (130), et la seconde lentille à focale variable (130) est adaptée pour recevoir le faisceau de lumière d'excitation (L) sortant de la première lentille à focale variable (120) ; et
l'unité de commande (140) est électriquement reliée à la première lentille à focale variable (120) et à la seconde lentille à focale variable (130),
**caractérisé en ce que** l'unité de commande (140) est adaptée pour régler de manière synchrone des longueurs focales de la première lentille à focale variable (120) et de la seconde lentille à focale variable (130), de telle sorte que
la longueur focale de la première lentille à focale variable (120) et la longueur focale de la seconde lentille à focale variable (130) sont changées en continu de telle sorte qu'un faisceau d'excitation de lumière parallèle reste un faisceau lumineux parallèle après un passage à travers les première et seconde lentilles à focale variable, de manière à changer en continu une taille d'un spot lumineux du faisceau de lumière d'excitation (L) passant à travers la seconde lentille à focale variable (130).

2. Système d'éclairage selon la revendication 1, dans lequel le faisceau de lumière d'excitation (L) passant à travers la seconde lentille à focale variable (130) est une lumière parallèle.

3. Système d'éclairage selon la revendication 1 ou 2, dans lequel un foyer (f) de la première lentille à focale variable (120) et un foyer (f) de la seconde lentille à focale variable (130) sont à la même position, dans lequel le foyer (f) de la première lentille à focale variable (120) et de la seconde lentille à focale variable (130) est situé entre la première lentille à focale variable (120) et la seconde lentille à focale variable (130), ou le foyer (f) de la première lentille à focale variable (120) et de la seconde lentille à focale variable (130) est situé entre la source de lumière d'excitation (110) et la première lentille à focale variable (120), ou le foyer (f) de la première lentille à focale variable (120) et de la seconde lentille à focale variable (130) est situé sur un côté de la seconde lentille à focale variable (130) s'éloignant de la première lentille à focale variable (120).

4. Système d'éclairage selon la revendication 1 ou 2 ou 3, dans lequel une distance entre la première lentille à focale variable (120) et la seconde lentille à focale variable (130) est fixe.

5. Système d'éclairage selon l'une quelconque des revendications précédentes, dans lequel une dioptrie de la première lentille à focale variable (120) et une dioptrie de la seconde lentille à focale variable (130) sont toutes deux positives.

6. Système d'éclairage selon l'une quelconque des revendications précédentes, dans lequel dans une séquence temporelle, une dioptrie de la première lentille à focale variable (120) est négative et une dioptrie de la seconde lentille à focale variable (130) est positive.

7. Système d'éclairage selon la revendication 6, dans lequel dans une autre séquence temporelle, la dioptrie de la première lentille à focale variable (120) est positive et la dioptrie de la seconde lentille à focale variable (130) est négative.

8. Système d'éclairage selon l'une quelconque des revendications précédentes, dans lequel une forme de spot lumineux (S1, S2, S3) du faisceau de lumière d'excitation (L) passant à travers la seconde lentille à focale variable (130) est circulaire.

9. Système d'éclairage selon l'une quelconque des revendications précédentes, comportant en outre une roue de conversion de longueur d'onde (150), disposée sur le trajet de transmission du faisceau de lumière d'excitation (L) passant à travers la seconde lentille à focale variable (130) et adaptée pour convertir le faisceau de lumière d'excitation (L) en un faisceau de lumière converti (Lp).

10. Dispositif de projection, comportant un système d'éclairage (100) selon la revendication 9, un modulateur de lumière (200) et une lentille de projection (300), dans lequel le système d'éclairage (100) est adapté pour délivrer un faisceau de lumière d'éclairage (L1), dans lequel le faisceau de lumière d'éclairage (L1) inclut le faisceau de lumière d'excitation (L) et le faisceau de lumière converti (Lp).

11. Dispositif de projection selon la revendication 10, dans lequel le modulateur de lumière (200) est disposé sur un trajet de transmission du faisceau de lumière d'éclairage (L1) et est adapté pour convertir le faisceau de lumière d'éclairage (L1) en un faisceau de lumière d'image (L2) ; et
la lentille de projection (300) est disposée sur un trajet de transmission du faisceau de lumière d'image (L2) et est adaptée pour laisser le faisceau de lumière d'image (L2) passer à travers.
